# EUROPEAN PATENT APPLICATION

(11) **EP 3 797 903 A1**
(43) Date of publication of application: **31.03.2021**
(21) Application number: 19020538.5
(22) Date of filing: 25.09.2019
(51) Int. Cl.: B22F 3/105, B23K 35/38

(54) **ADDITIVE MANUFACTURING PROCESS GAS FOR LIGHTWEIGHT METALS**

(71) Applicant: Linde GmbH, 82049 Pullach (DE)
(72) Inventor: Foret, Pierre, 80796 München (DE); Dietrich, Kai, 80686 München (DE); Pauzon, Camille, 46130 Trollhättan (SE); Arunprasad, Tanja, 80336 München (DE)
(74) Representative: Gellner, Bernd

(57) **Abstract**

According to an aspect of the invention, there is provided a method of forming a three-dimensional (3D) object in a manufacturing space, wherein the 3D object is made from a metal alloy comprising one or more volatile alloy components, the method comprising the steps of:
- providing a process gas into the manufacturing space, the process gas having a density higher than that of an argon gas at standard test conditions;
- increasing the density of the process gas by increasing the pressure within the manufacturing space and/or cooling of the process gas;
- providing a metal powder on a build platform in the manufacturing space;
- melting the metal powder with a heat source; and
repeating the steps of providing the metal powder and melting the metal powder.

## Description

The present invention relates to a method and a device for forming a three-dimensional object in a manufacturing space using process gas for lightweight metals.

The main differences between processes for additive manufacturing (AM) are in the way layers are deposited to create parts and in the materials that are used. Some methods melt or soften the material to produce the layers, for example selective laser melting (SLM) or direct metal laser sintering (DMLS), selective laser sintering (SLS), fused deposition modeling (FDM), or fused filament fabrication (FFF), while others cure liquid materials using different sophisticated technologies. These additive manufacturing processes are summarized by the term laser powder bed fusion (L-PBF).

Selective laser sintering (SLS) is an additive manufacturing (AM) technique that uses a laser as the power source to sinter powdered material, aiming the laser automatically at points in space defined by a 3D model, binding the material together to create a solid structure. It is similar to direct metal laser sintering (DMLS). Both are instantiations of the same concept but differ in technical details. Selective laser melting (SLM) uses a comparable concept, but in SLM the material is fully melted rather than sintered, allowing different properties (crystal structure, porosity, and so on). SLS involves the use of a high power laser (for example, a carbon dioxide laser) to fuse small particles of plastic, metal, ceramic, or glass powders into a mass that has a desired three-dimensional shape. The laser selectively fuses powdered material by scanning cross-sections generated from a 3-D digital description of the part (for example from a CAD file or scan data) on the surface of a powder bed. After each cross-section is scanned, the powder bed is lowered by one layer thickness, a new layer of material is applied on top, and the process is repeated until the part is completed. Because finished part density depends on peak laser power, rather than laser duration, a SLS machine typically uses a pulsed laser.

Selective laser melting (DLMS) is a particular rapid prototyping, 3D printing, or Additive Manufacturing (AM) technique designed to use a high power-density laser to melt and fuse metallic powders together. In many SLM is considered to be a subcategory of Selective Laser Sintering (SLS). The SLM process has the ability to fully melt the metal material into a solid 3D-dimensional part unlike SLS. With selective laser melting, thin layers of atomized fine metal powder are evenly distributed using a coating mechanism onto a substrate plate, usually metal, that is fastened to an indexing table that moves in the vertical (Z) axis. This takes place inside a chamber containing a tightly controlled atmosphere of inert gas, either argon or nitrogen at oxygen levels below 500 to 1000 parts per million. Once each layer has been distributed, each 2D slice of the part geometry is fused by selectively melting the powder. This is accomplished with a high-power laser beam, usually a fiber laser with hundreds of watts. The laser beam is directed in the X and Y directions with two high frequency scanning mirrors. The laser energy is intense enough to permit full melting (welding) of the particles to form solid metal. The process is repeated layer after layer until the part is complete.

Direct metal laser sintering (DMLS) is an additive manufacturing metal fabrication technology, occasionally referred to as selective laser sintering (SLS) or selective laser melting (SLM), that generates metal prototypes and tools directly from computer aided design (CAD) data. It is unique from SLS or SLM because the process uses a laser to selectively fuse a fine metal powder. DMLS uses a variety of alloys, allowing prototypes to be functional hardware made out of the same material as production components. Since the components are built layer by layer, it is possible to design organic geometries, internal features and challenging passages that could not be cast or otherwise machined. DMLS produces strong, durable metal parts that work well as both functional prototypes or end-use production parts. The DMLS process begins with a 3D CAD model whereby a stl-file is created and sent to the machine's computer program. The DMLS machine uses a high-powered 200 watt Yb-fiber optic laser. Inside the build chamber area, there is a material dispensing platform and a built platform along with a recoater blade used to move new powder over the built platform. The technology fuses metal powder into a solid part by melting it locally using the focused laser beam. Parts are built up additively layer by layer, typically using layers 20 to 50 micrometers thick.

In general additive manufacturing is a manufacturing technology that includes a methodology whereby a heat source melts a feedstock of material which is deposited onto a substrate. Computer control of the movement of the heat source, and the source of the feedstock, makes it possible to build complex components. In additive manufacturing the processing is not limited to the above-mentioned methods in which metal powders are processed but composites or polymers are processed. The heat source can include (but is not limited to) the already mentioned laser beam, an arc, or other plasma-based heat sources.

LMF processes take place in a process chamber that is filled with a process gas. Usually, an inert gas is used, in which the contaminants must be strictly controlled. For example, the oxygen content may not exceed a certain threshold between 1ppm and 1000ppm. Another example of contamination is the moisture present in the process space, which also needs to be tightly controlled. Further examples of impurities are nitrogen, hydrogen, CO₂ and other gases.

When a process chamber of an additive manufacturing device is opened to remove a manufactured component in order to begin production of a new component, ambient air enters the process chamber. This ambient air must be removed by purging the chamber with inert gas until an oxygen content has dropped to a certain threshold. The purging gas is introduced into the process chamber via one or more gas inlets. The purging of the chamber takes a relatively long time, especially when the threshold levels of impurities are low.

Another source of contamination is the powder itself, which may have absorbed impurities on the surface of the particles, which are then released during the melting process, thereby contaminating the process gas atmosphere. Therefore, a continuous cleaning process or Rinse process of the process chamber held to keep the impurities below an allowable threshold.

During additive manufacturing the laser sintering or laser melting of the powder feed requires inert gas protection as the resulting molten metal can be in the range of over 600°C for alumina alloys or over 1500°C for most other metals. It is vital that the melt pool be protected from high temperature oxidation from oxygen in the atmosphere. It is vital that oxygen levels are below 1000 ppm for sensitive materials like titanium and its alloys, the requirement can be below 100 ppm and lower and for some other alloys very sensitive to oxygen can be as low as 10 ppm.

It is always necessary to protect the molten pool from oxidation as this can lead to well defects and the reduction in corrosion resistance and reduced mechanical properties and lower fatigue and fracture strength. This particularly is the case in creep resistant materials, alloy steels, stainless steels and its alloys, nickel and its alloys and titanium and its alloys. The usual method of protecting the cell/chamber is to purge the volume by passing a stream of an inert gas such as argon into the cell volume to reduce the oxygen level. This limits the availability of oxygen at the side of the laser melt pool to cause oxidation. Some materials suffer oxidation discoloration in reactive metals and embrittlement by oxygen.

A process chamber is mostly purged with an inert gas, generally argon and rarely nitrogen, to remove air from a built space and/or a process chamber. The oxygen content inside the chamber is at a level of about 0,1 % O₂ (1000 ppm) after a purging process and during manufacturing process. This aims at reducing material oxidation.

The flow of inert gas ensures for example a clean laser path, the removal of fumes and spatter nearby the process area, where the laser hits the powder bed.

The nature and properties concerning thermal conductivity and density of the shielding gas are impacting significantly the components' properties concerning porosity.
Most efforts to improve existing additive manufacturing techniques focus on laser parameters such as power, scanning speed etc. in order to optimize the Laser Powder Bed Process. Mostly a process gas is only used to ensure removal of fumes and spatter. In this context, the process window is narrow and processing speed is limited in order to achieve high density parts.

The scope of gases for Laser Powder Bed Fusion is today limited to Argon and/or Nitrogen, for their inert character to most metal powders available. However, while Argon is a noble gas, Nitrogen may dissociate and react with the high temperature metal, possibly forming nitrides.

Furthermore, some alloying elements can be volatile and tend to evaporate form the molten pool at high temperatures. This selective vaporization of the alloying metals can result in an undesirable change of the final composition. Thus, metals like zinc, lithium or magnesium can easily evaporate from the alloys containing such metals.

One of the examples of alloys containing lightweight elements are aluminum alloys. While aluminum boils at about 2500 °C, metals like Mg and/or Li will evaporate at the temperatures below 1300 °C. The change in composition after volatilization can, in turn, cause changes in the mechanical properties of the resulting alloy, such as tensile properties, hardness or corrosion resistance. In addition, the fumes produced during evaporation will interfere with the laser, causing difficulties in performing the printing process and resulting in poor quality printed product(s), such as increased porosity and/or melt surface depressions caused by evaporation.

It is an object of embodiments of the present invention to at least mitigate one or more of the problems with the prior art.

According to an aspect of the invention, there is provided a method of forming a three-dimensional (3D) object in a manufacturing space, wherein the 3D object is made from a metal alloy comprising one or more volatile alloy components, the method comprising the steps of:
providing a process gas into the manufacturing space, the process gas having a density higher than that of an argon gas at standard test conditions;
increasing the density of the process gas by increasing the pressure within the manufacturing space and/or cooling of the process gas;
providing a metal powder on a build platform in the manufacturing space;
melting the metal powder with a heat source; and
repeating the steps of providing the metal powder and melting the metal powder.

Advantageously, the provision of the high density gas allows better removal of the laser-machining fumes compared to the low density gases, as using of the high density gas tends to reduce evaporation of the lightweight allowing elements like Li, Mg or Zn from the molten pool. This effect is provided by increasing the partial vapour pressure of the alloying elements over the molten pool of the alloy. This in turn affects the final composition of the alloy and makes it less susceptible to change in composition.

In some embodiments, said process gas is a mixture of a low density gas and a high density gas.

In some embodiments, said process gas comprises an inert gas. As used herein, the term "inert gas" refers to a gaseous element or compound that does not react with any component of the alloy. The use of the inert gas is advantageous when there is a need to eliminate the possibility of undesired by-product formation during the process of 3D-printing. That is, a gaseous medium for the manufacturing space has to be selected taking into account alloy composition.

Alternatively, said process gas comprises a reactive gas. As used herein, the term "reactive gas" refers to a gaseous element or compound that may react with one or more components of the alloy at certain conditions. The use of reactive gas such as carbon dioxide is advantageous when there is the need to prevent evaporation of certain alloying components, but the density of the inert gas is not enough to adequately control the partial pressure above the melt pool. Reactive gases may also be less expensive than inert gases such as Xenon or Krypton. However the conditions within the manufacturing space have to be adjusted such that at said conditions a normally reactive gas would not react with any of the alloying components.

In some embodiments, said inert gas is a noble gas, preferably wherein the inert gas comprises krypton, xenon or a mixture thereof. Advantageously, said gases have a density that is higher than that of argon (see Table 1) below. This enables control of the partial pressure of the volatile alloying components and thus prevents evaporation.

In some embodiments, said reactive gas comprises carbon dioxide.

Alternatively, the reactive gas comprises carbon monoxide mixed with another gas, such that the mixture has a density higher than that of Argon at standard test conditions.

**Table 1. Density of gases at standard conditions**

| Gas | Density, kg/m3 |
|---|---|
| Argon | 1.784 |
| Helium | 0.1786 |
| Carbon dioxide | 1.977 |
| Carbon monoxide | 1.250 |
| Nitrogen | 1.2506 |
| Krypton | 3.749 |
| Xenon | 5.894 |

In some embodiments, said volatile alloy components comprise any one of lithium, magnesium or zinc. Advantageously, the use of these metals allow to achieve such mechanical properties as high strength, low density, high stiffness, superior damage tolerance, excellent corrosion resistance and weldability.

In some embodiments, the method comprises the step of increasing the pressure inside the manufacturing space wherein the pressure is increased to a pressure between 10Pa and 100kPa above atmospheric pressure. Advantageously, this allows to further increase the density of the process gas used in the manufacturing space by concentrating it in the enclosed space of the finite volume. This, in turn allows to further increase the stability of the melt pool and reduce volatilization of the lightweight metals.

Alternatively or additionally, the method further comprises the step of cooling the process gas. As the process of increasing the density will lead to the heating of the gas, an optional cooling step can be advantageously used for decreasing the temperature and, in turn, further increasing the density of the process gas in the manufacturing space at a given pressure.

In some embodiments, the step of cooling the process gas comprises providing a closed-circuit conduit system through which the process gas is arranged to flow, wherein a cooling means is provided within the conduit system.

In some embodiments, the step of cooling the process gas comprises providing a cooling jacket around the manufacturing space. This advantageously allows to control the temperature inside the manufacturing space. It also allows to decrease the temperature of the process gas. A liquid coolant is sent through the passages or conduits of the cooling jacket, thus decreasing the temperature of the adjacent manufacturing space.

In some embodiments, the method further comprises the step of adapting a process gas flow into the manufacturing space to control the density of the process gas, wherein the process gas flow is controlled by a pump connected to the manufacturing space. This advantageously allows to choose the optimal process parameters in the manufacturing space depending on the chosen process gas (or a mixture of gases) and of the metal alloy to be 3D-printed, which can result in time reduction of an average build job and processing speed.

According to another aspect of the invention, there is provided a system configured to implement a method as described above.

Optionally, the system comprises a cooling means arranged to cool the process gas.

In an embodiment the system comprises a control means arranged to control the pressure within the manufacturing space.

Optionally, the system is provided with a process gas supply, the process gas supply being a supply of an inert gas, preferably krypton, xenon or a mixture thereof. Alternatively, the system may be provided with a process gas supply, the process gas supply being a supply of a reactive gas, preferably carbon dioxide.

It will be understood that standard test conditions may refer to standard temperature and pressure (0 degrees C, 1 bar pressure).

The present invention can also be defined as a method for additive manufacturing, wherein a part is built by selectively melting a material and building a part additively layer by layer using a heat source, preferably a laser, melting the material, wherein the process is conducted in a chamber and the chamber is filled up with a high density process gas as defined above.

According to the present invention the manufacturing space can be a built space of a production unit defined by a wall of a housing of the production unit and a built platform of a lift table disposed inside the wall of the housing. Furthermore, the manufacturing space can be a process chamber of a device for additive manufacturing.

The invention is explained below with the aid of embodiments shown in the drawings. The drawings show in:
- Figure 1: a rough schematic view of a device for additive manufacturing according to the present invention,
- Figure 2: a rough schematic view of the system for supplying and densification of the process gas
- Figure 3: a rough schematic view of the system for supplying and densification of the process gas further including a cooling jacket

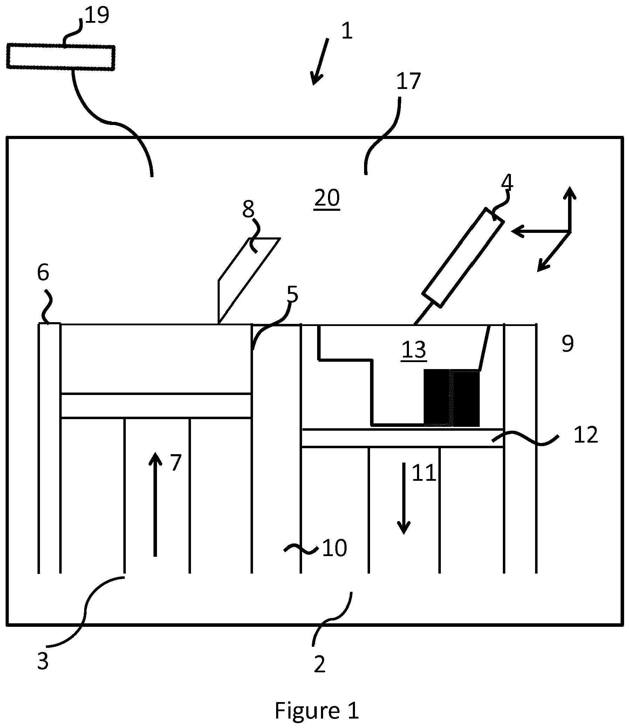

Hereinafter an apparatus for additive manufacturing 1 according to the present invention is explained in detail (Figure 1).

The apparatus 1 comprises a production unit 2, a delivery unit 3 and a heat source 4.

The heat source 4 according to a preferred embodiment comprises a laser and a corresponding scanner system for melting metal powder (not shown).

The delivery unit 3 or delivery cylinder respectively comprises a housing 5 with a wall 6 wherein a powder delivery piston 7 is disposed inside the housing 5.

A powder applying device 8, for example a roller, is provided for pushing a metal powder from the delivery unit 3 to the production unit 2.

The production unit 3 comprises a housing 9 with a wall 10. In a view form above the cylindrical production unit 3 can have a rectangular- or a square- or a round shape and can be defined as production cylinder 3.

A lift table 11 with a built platform 12 is disposed inside the wall 10 of the housing 9. The lift table 11 and the corresponding built platform 12 embody a fabrication piston.

The wall 10 of the housing 9 and the built platform 12 of the lift table 11 of the production unit 2 define a built space 13.

The built space 13 houses the fabrication powder bed and therefore the object being fabricated.

The built platform 12 can be an integral part of the lift table 11 of the fabrication piston or a separate part connected to the lift table 11.

Furthermore, a processing chamber 17 is provided surrounding the production unit 2, the delivery unit 3 and the heat source 4, for example a laser and preferably a fiber laser.

The manufacturing space 20 according to the present invention is therefore the build space 13 of the production unit 2 defined by the 10 wall of the housing 9 of the production unit 2 and the lift table 11 with the built platform 12 disposed inside the wall 10 of the housing 9, and/or the manufacturing space is the room within the processing chamber 17.

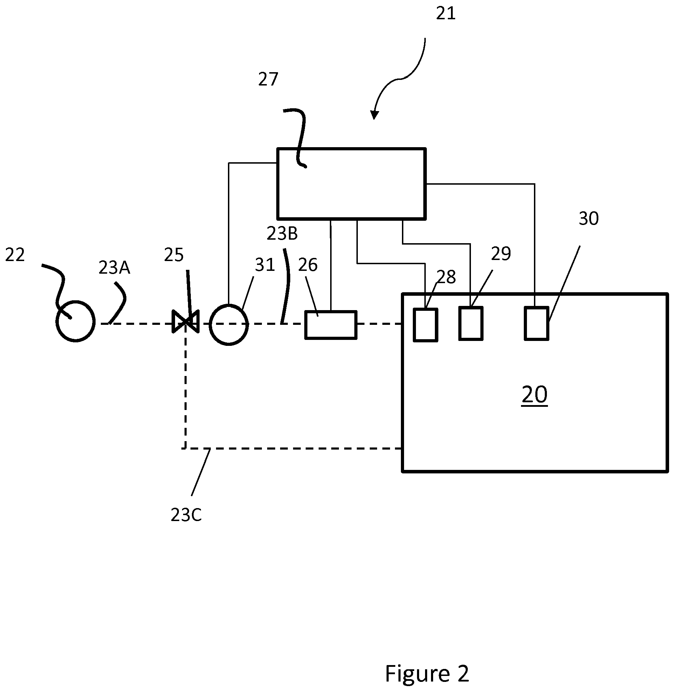

According to Figure 2, a system 21 for supplying gases to the manufacturing space 20 is illustrated.

It will be understood that in the present embodiment the manufacturing space 20 additionally contains all of the components shown in figure 1. However, in alternative embodiments, the manufacturing space may be configured to produce components by a different method of additive manufacture (AM). Accordingly, different components may be present in the manufacturing space in such embodiments.

The system comprises a gas supply 22 that provides process gas to the manufacturing space via a first conduit 23A and a second conduit 23B.

The gas supply may comprise a single pressurized gas cylinder containing process gas. In an alternative embodiment, when a mixture of gases is used, two or more cylinders containing different gases can be provided. One cylinder can be, for example, an inert gas, and in the other cylinder can be a reactive gas (not shown). According to such an embodiment a mixing device may be provided for mixing the gases. Alternatively, a single cylinder containing the pre-mixed process gas may be provided.

The first conduit 23A connects the gas supply 22 to a three-way valve 25. The manufacturing space 20 is also connected to the valve 25 via the second conduit 23B and a third conduit 23C. The valve 25 controls both the supply of the process gas into the manufacturing space 20 and the flow of the process gas out of the manufacturing space.

The valve 25 has three positions:
I. connect the first conduit 23A to the second conduit 23B;
II. connect the second conduit 23B to the third conduit 23C; or
III. connect the second conduit 23B to an exhaust conduit (not shown).

It will be understood that in position I, the valve allows flow of process gas from the supply 22 into the manufacturing space 20.

In position II, the valve allows recirculation of the process gas within the manufacturing space 20.

In position III, the valve allows gas from within the manufacturing space to be purged.

A cooling means 26 is positioned in the second conduit 23B between the gas supply 22 and the manufacturing space 20 and may be used to cool down the process gas, either during recirculation of the process gas, or as the process gas is introduced into the manufacturing space.

A control unit 27 is provided as part of the system 21.

The control unit 27 receives signals from a pressure sensor 28, temperature sensor 29 and an oxygen sensor 30, each of which are disposed within the manufacturing space 20.

The oxygen sensor 30 is used for measuring the proportion of oxygen (O₂) in the manufacturing space 20. This is important because the presence of oxygen in the manufacturing space is undesirable as it may lead to unwanted byproduct formation during the printing process (i.e. surface oxide film formation), that will in turn lead to a change in mechanical properties of the final product.

In general, the machine design is so that the oxygen sensor is relatively away from the zone of interest, i.e. the laser-powder matter interaction area. For example, a sensor placed at the top of the chamber, may not be representative of the process and could be influenced by the shielding gas density.

By sampling a little bit of gas next to the baseplate, a measurement of the oxygen representative of the melt pool surrounding is performed.

In addition to receiving signals from the sensors 28, 29, 30, the control unit 27 is also operable to control the pump 31, the valve 25 and the cooling means 26, in order to provide a desired set of conditions within the manufacturing space 20.

In some embodiments, the control unit 27 may also be operable to control the heat source 4, the roller 8, the delivery unit 3 and the lift table 11 so as to create a part of a desired geometry. However, in other embodiments a separate control unit may be provided to control the powder delivery and heating processes.

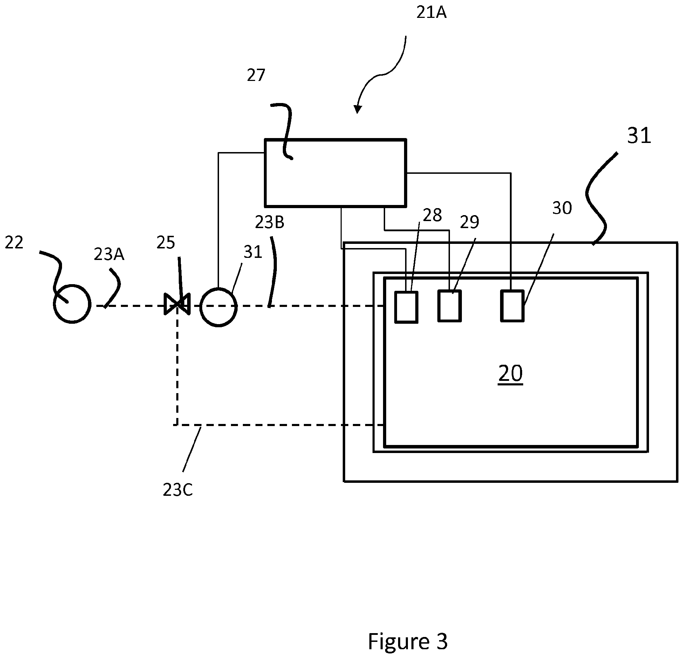

Referring now to Figure 3, an alternative system 21A for supplying and densification of the process gas is provided. The references numerals in figure 3 refer to the same features in Figure 2, therefore will not be described again in detail. However, in figure 3 the cooling means 26 is not provided in the second conduit 23B. Instead, a cooling jacket 31 is provided around the manufacturing space 20 to decrease the temperature inside the manufacturing space. Again, the cooling jacket 31 is controlled by the control unit 27.

Each of the systems 21, 21A is capable of providing a controlled atmosphere comprising a high-density gas at elevated pressure and/or at reduced temperature. As will be discussed in more detail below, the present inventors have discovered that such an atmosphere can reduce evaporation of lightweight alloying elements whilst also improving the stability of the melt pool during an additive manufacturing process.

The process by which the system 21 controls the atmosphere within the manufacturing space 27 to provide a desired set of conditions will now be described.

The apparatus for additive manufacturing 1 establishes its atmosphere by first purging the chamber and then, when the control unit 27 detects that pressure in the chamber is less than a given value, it starts to recirculate the high-density process gas. Leakages and other side effects are compensated by a holding flow.

According to this method, the process gas is a gas or mixture of gases with at density at standard test conditions that is higher than that of an argon gas at standard test conditions. The process gas is supplied from cylinder 22.

The control unit 27 is arranged to control the valve 25 and the pump 31 to provide an controlled atmosphere within the manufacturing space 20 according to a defined specification, which may be provided by a user via a user interface (not shown).

The specification may specify the type of process gas, as well as the maximum allowable concentrations of any impurities such as oxygen. A required range of temperature and/or pressure may also be defined by the specification.

In all cases, an automatic control loop is provided by the control unit 27 to maintain the parameters within the specified limits. In the simplest type of an automatic control loop, a controller compares a measured value of oxygen or another parameter with a desired set value, and processes the resulting error signal to change some input to the process, in such a way that the process reaches the set point for oxygen or the other parameter despite disturbances.

Once the atmosphere within the manufacturing space 20 matches the specification, a layer of metal powder is then supplied into the manufacturing space 20 and partially melted with a heat source 4. The steps of providing and partially melting a metal powder are then repeated until the component is finished, provided the atmosphere within the manufacturing space 20 remains within the specification.

As discussed above, the control unit 27 is configured to continuously perform closed-loop control to ensure that the atmosphere in the manufacturing space matches the specification, and appropriate action is taken to correct any deviation.

The inventors discovered that using the higher density gas(es) in the process described above reduces vaporization when producing components from powders comprising lightweight alloying elements like Li, Mg and/or Zn. This has been found to be particularly effective if the density of the process gas is increased by increasing the pressure within the manufacturing space 20 and/or by cooling the process gas.

The high density gases used in the process are not restricted to inert gases as traditionally used in additive manufacturing. Optionally, a mixture of high density and low density gases can be used, provided the density of the mixture (at standard test conditions) is higher than that of Argon. The high density gases can comprise without limitation krypton, xenon, carbon monoxide and/or carbon dioxide. The low-density gas may be, without limitation, helium, argon or nitrogen.

As discussed above, in order to further increase the density of the process gas the temperature of the gas can be reduced and/or the pressure in the manufacturing space can be increased.

Increase the pressure in the manufacturing space can be done by increasing the amount of gas in the manufacturing space (i.e. pumping more gas into the closed volume of the manufacturing chamber). Indeed, if the control unit 27 is provided with a higher target pressure, then it can be arranged to perform closed-loop control to maintain the increased pressure.

In an embodiment, the pressure can be increased to a pressure only slightly above atmospheric pressure (for example 1 bar above atmospheric pressure) to a pressure of up to 5 bar or 10 bar above atmospheric pressure.

This pressure increase will lead to an increase in the temperature of the process gas. Hence, it may be desirable to cool the manufacturing space to compensate for the increase in temperature from compression. This may be necessary in some embodiments, as the deviation from the set process temperature during the printing can affect the performance and, in turn, the properties of the printed product. In any event, cooling of the process gas further increases the density of the process gas at a given pressure. Therefore, cooling the cas enables higher densities within the chamber to be achieved.

Cooling the process gas can be achieved by recirculating the process gas through a cooling means 26, as shown in figure 2. Alternatively, a cooling jacket 31 as shown in figure 3 or any other appropriate cooling system may be used.

Cooling of the gas leads to an increase of density at a given pressure, hence a higher density process gas can be produced. If the control unit 27 is set to maintain a given pressure, then cooling the process gas will lead to an increase in density, as it will be necessary to introduce more gas into the closed volume to maintain the required pressure.

The steps of increasing the pressure and cooling the gas can be used separately or sequentially to enhance the overall effect of densifying the process gas.

When changing the pressure and/or temperature of the manufacturing space, other process parameters have to be adjusted accordingly. These parameters include, without limitation, gas flow speed, laser power, oxygen detection method.

Unless otherwise stated, all technical features described in connection with the embodiments of the apparatus are applicable in connection with method steps for the method according to the present invention.

### List of Reference Numbers

- 1: device
- 2: production unit
- 3: delivery unit
- 4: heat source
- 5: housing
- 6: wall
- 7: powder delivery piston
- 8: powder applying device
- 9: housing
- 10: wall
- 11: lift table
- 12: built platform
- 13: build space
- 14: device for feeding a gas and/or a gas mixture comprising Helium and Argon
- 15: storage vessel
- 16: feeding device/pump
- 17: processing chamber
- 18: gas flow controlling system
- 19: oxygen monitoring and controlling system
- 20: manufacturing space
- 21, 21A: system for supplying and densification of gases
- 22: gas supply
- 23: inlet conduit
- 24: outlet conduit
- 25: valve
- 26: cooling means
- 27: control system
- 28: pressure sensor
- 29: temperature sensor
- 30: oxygen sensor
- 31: cooling jacket

## Claims

1. A method of forming a three-dimensional (3D) object in a manufacturing space, wherein the 3D object is made from a metal alloy comprising one or more volatile alloy components, the method comprising the steps of:
providing a process gas into the manufacturing space, the process gas having a density higher than that of an argon gas at standard test conditions;
increasing the density of the process gas by increasing the pressure within the manufacturing space and/or cooling of the process gas;
providing a metal powder on a build platform in the manufacturing space;
melting the metal powder with a heat source; and
repeating the steps of providing the metal powder and melting the metal powder.

2. The method of claim 1, wherein said process gas is a mixture of a low density gas and a high density gas.

3. The method of claim 1 or 2, wherein said process gas comprises an inert gas.

4. The method of claim 1 or 2, wherein said process gas comprises a reactive gas.

5. The method of claim 3, wherein said inert gas is a noble gas, preferably wherein the inert gas comprises krypton, xenon or a mixture thereof.

6. The method of claim 4, wherein said reactive gas comprises carbon dioxide.

7. The method of claim 2, or any of claims 3 to 6 when dependent on claim 2, wherein the reactive gas comprises carbon monoxide, nitrogen or a mixture thereof.

8. The method of claim 1, wherein said volatile alloy components comprise any one of lithium, magnesium or zinc.

9. The method of any one of claims 1 to 8, wherein the method comprises the step of increasing the pressure inside the manufacturing space, and wherein the pressure is increased to a pressure between 10Pa and 100kPa above atmospheric pressure.

10. The method of any one of claims 1 to 9, further comprising the step of cooling the process gas, wherein the step of cooling the process gas preferably comprises providing a closed-circuit conduit system through which the process gas is arranged to flow, wherein a cooling means is provided within the conduit system, and/or wherein the step of cooling the process gas comprises providing a cooling jacket around the manufacturing space.

11. The method of any one of claims 1 to 10, further comprising the step of adapting a process gas flow into the manufacturing space to control the density of the process gas, wherein the process gas flow is controlled by a pump connected to the manufacturing space.

12. A system configured to implement the method of any one of claims 1 to 11.

13. The system of claim 14, wherein the system comprises a cooling means arranged to cool the process gas.

14. The system of claim 12 or claim 13, wherein the system comprises a control means arranged to control the pressure within the manufacturing space.

15. The system of any one of claims 12 to 13, wherein the system is provided with a process gas supply, the process gas supply being a supply of an inert gas, preferably krypton, xenon or a mixture thereof4-14, and/or wherein the system is provided with a process gas supply, the process gas supply being a supply of a reactive gas, preferably carbon dioxide.
